# EUROPÄISCHE PATENTSCHRIFT

(11) **EP 0 656 502 B1**
(45) Veröffentlichungstag und Bekanntmachung des Hinweises auf die Patenterteilung: **05.04.2000**
(21) Anmeldenummer: 94118982.1
(22) Anmeldetag: 01.12.1994
(51) Int. Cl.: F16L 17/02, F16L 17/04

(54) **Dichtvorrichtung zum Abdichten von Rohrleitungen**
Sealing device for sealing pipelines
Dispositif d'étanchéité pour l'étanchement d'une tuyauterie

(30) Priorität: 02.12.1993 DE 4341133; 15.03.1994 DE 4408743
(43) Veröffentlichungstag der Anmeldung: 07.06.1995
(73) Patentinhaber: Ilesic, Peter, 62000 Maribor (SI)
(72) Erfinder: Ilesic, Peter, 62000 Maribor (SI)
(74) Vertreter: Konnerth, Dieter Hans

(56) Entgegenhaltungen:
- EP-A- 0 180 824
- FR-A- 2 471 542
- GB-A- 2 186 651
- US-A- 1 833 776

## Beschreibung

Die Erfindung bezieht sich auf eine Dichtvorrichtung zum Abdichten von Rohrleitungen für gasförmige oder fluide Medien, die ein die Rohrleitung umgreifendes, schließbares Gehäuse und ein Dichtelement enthält, das aus elastomerem Werkstoff besteht, im Gehäuse ringförmig angeordnet ist und an seinen beiden axialen Randbereichen zwei axial beabstandete, radial einwärts hervorstehende Ringwulste aufweist, die sich beim Spannen des Gehäuses an die abzudichtende Rohrleitung anlegen.

Bei einer Dichtvorrichtungen dieser Art wird das geöffnete, unverspannte Gehäuse mit dem Dichtelement um eine abzudichtende Rohrleitung herum angeordnet. Durch Verspannen des Gehäuses wird der Ringwulst des Dichtelementes radial gegen die Außenseite der Wand der Rohrleitung bewegt, bis sich die Dichtfläche des Ringwulstes mit einer erforderlichen Anpreß- oder Dichtkraft gegen die Rohrwand preßt. Wird das in der Rohrleitung enthaltene gasförmige oder fluide Medium unterschiedlichen Betriebsdrücken (Unterdruck oder Überdruck) ausgesetzt, so muß die Anpreßkraft des Ringwulstes an die Rohrwand für die jeweiligen Druck- und somit Kraftunterschiede an der Dichtfläche zwischen Druckraum und Umgebung angepaßt und eingestellt werden. Wird eine zu geringe Anpreßkraft aufgebracht, so kann die Dichtung bei Erhöhung des Innendruckes undicht werden, da sich der beispielsweise in Kreisbogenform gestaltete Ringwulst von der Wand der Rohrleitung abhebt. Daher wird es erforderlich sein, vorsorglich eine erhöhte Anpreßkraft aufzubringen, um eine ausreichende Abdichtung auch für die maximalen Druck- und Kraftunterschiede im Dichtungsbereich zu schaffen.

Bei Verwendung dünnwandiger Rohre darf jedoch die aufzubringende Anpreßkraft der Dichtung aufgrund der begrenzten Festigkeit der Rohre einen vergleichsweise geringen, von dieser Festigkeit abhängigen Wert nicht übersteigen. Diese Begrenzung der Anpreßkraft ist insbesondere bei Rohren aus Kunststoff mit geringerer Festigkeit gegenüber Rohren aus Metall zu berücksichtigen. Diese nur in begrenztem Maß zulässige Anpreßkraft kann aber, wie erwähnt, eine ungenügende Dichtwirkung zur Folge haben, insbesondere bei wechselnden Drücken, bei denen die Dichtung 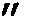 arbeitet", d. h. Mikrobewegungen im elastischen Bereich ausführt, und bei geringem Druck oder bei Unterdruck des Mediums, bei dem mit herkömmlichen Dichtungen Schwierigkeiten beim Abdichten auftreten.

Aus der Druckschrift GB-A-2 186 651 ist eine Steckkupplung mit einer eingangs genannten Dichtvorrichtung bekannt geworden, die zum Verbinden der Enden zweier Rohre dient. Sie weist als Dichtvorrichtung eine Muffe oder Manschette aus Gummi und eine die Muffe umgebende Spannschelle auf. Die Muffe hat auf der Innenseite eine umlaufende mittlere Rippe, die eine Abdichtung der Rohrverbindung zwischen den Stirnflächen der Rohrenden bewirkt. Beiderseits der Rippe ist jeweils eine Ringnut ausgebildet, die in axialer Richtung nach außen hin von einem gerippten Bereich begrenzt ist. Der gerippte Bereich enthält eine innere umlaufende Rippe oder Dichtlippe und eine äußere umlaufende Rippe oder Dichtlippe, deren Flanken jeweils radial einwärts keilförmig oder konisch zulaufen und einen abgerundeten Kopfbereich aufweisen. Die beiden Rippen sind durch eine Nut voneinander getrennt, die im Kopfbereich der beiden Rippen zumindest deren Breite aufweist. Bei der Montage werden die zu kuppelnden Rohrenden beidseits in die Muffe geschoben, bis ihre Stirnseiten an der mittleren Rippe dicht anliegen. Dabei werden in jedem gerippten Bereich die beiden Rippen von der Rohrwand einwärts gebogen, wobei sie sich geringfügig berühren. Die sich an die Rohrwand anlegenden Dichtflächen der beiden Rippen werden somit von ihren nach außen weisenden Flanken gebildet, die sich beim weiteren Verspannen der Spannschelle an die Rohrwand anlegen und mit zunehmender Verspannung einen axial breiteren Dichtbereich bilden. Nach dem Spannen der Spannschelle ist der Boden der Ringnut gegen die Rohrwand gedrückt und die beiden Rippen sind ebenfalls weitgehend gegen die Rohrwand gedrückt. Da jedoch die Kopfbereiche der beiden Rippen abgerundet sind, verbleibt beim radialen Komprimieren der Muffe ein Hohlraum zwischen dem abgerundeten Kopf der äußeren Rippe und der Flanke der inneren Rippe. Aufgrund der großen axialen Breite der Nut zwischen den beiden Rippen und durch das Umbiegen der Rippen gegen die Rohrwand schließt sich beim Verspannen die Nut von der Rohrwand her ins Innere der Muffe nur sukzessive und damit ungleichmäßig. Eine gleichmäßige Kraftübertragung von der inneren Rippe auf die äußere Rippe findet dabei nicht statt.

Der Erfindung liegt daher die Aufgabe zugrunde, eine eingangs genannte Dichtvorrichtung zu schaffen, die eine universelle und dauerhafte Abdichtung von Rohrleitungen aus unterschiedlichen Materialien und Festigkeiten sowohl bei niedrigen wie auch bei hohen Leitungsdrücken und auch bei hoher Beanspruchung der Verbindung ermöglicht.

Diese Aufgabe wird durch eine Dichtvorrichtung mit den Merkmalen des Anspruchs 1 gelöst. Vorteilhafte Ausgestaltungen der Erfindung sind in den Unteransprüchen angegeben.

Beim Festlegen der Dichtvorrichtung an einer Rohrleitung, beispielsweise an einer undichten Stelle eines Rohres oder an der Stelle einer Rohrleitungsverbindung, wird beim Verspannen des Gehäuses die Dichtfläche des ersten Radialwulstes an die Rohrwand angelegt, so daß sie eine erste Abdichtung bildet. Durch die axial erweiterte Länge der Dichtfläche wird ein verbreiterter Dichtbereich gebildet, so daß eine geringe, die Rohrwand in zulässigem Maß belastende Anpreßkraft des Radialwulstes für eine erste, innere Abdichtung ausreichend ist. Aufgrund des geneigten, unter einem Winkel zur Längsachse angeordneten Spaltes drückt der erste Radialwulst beim Verspannen der Dichtvorrichtung auf die Dichtlippe des zweiten Radialwulstes, die sich dadurch fest an die Rohrwand legt und eine zusätzliche äußere, zweite Abdichtung bildet, deren Dichtwirkung durch die einwärts gerichtete Dichtlippe verbessert wird. Damit sind auch Rohrleitungen mit geringem Mediendruck zuverlässig abdichtbar.

Da der abdichtende Ringwulst bei Anwendung an einer Rohrverbindung nicht im Wirkungsbereich der Rohrleitungskräfte (axiale Bewegung oder Torsionsbewegung) liegt, sondern auf der Umfangsfläche der Rohrleitung aufliegt und dort dosiert angepreßt wird, bleibt die Abdichtung dank geringer mechanischer Beanspruchung dauerhaft elastisch. Bei Rohrverbindungen ist kein präziser Rohrstoß nötig und die Rohrenden müssen nicht speziell bearbeitet werden, da das erfindungsgemäße Dichtelement sowohl auf rauher wie auch auf glatter Oberfläche eine gute Dichtwirkung aufweist.

In einer vorteilhaften Ausgestaltung enthält der erste Radialwulst eine axiale Ringnut in Form einer Hinterschneidung auf seiner in axialer Richtung betrachtet dichtungsinneren Seite, d. h. auf derjenigen Seite eines Dichtungsinnenraumes, die dem in der Leitung vorhandenen und gegenüber der Umgebung abzudichtenden Medium zugewandt ist. Durch die Hinterschneidung wird somit eine ausgeprägte, hervorstehende, spitzwinklig zulaufende Dichtlippe gebildet.

Wenn bei Zunahme des Druckes in der Leitung auch der Druck in dem Dichtungsraum proportional zunimmt, der dann auf die Hinterschneidung am ersten Radialwulst drückt, so ergibt sich einerseits ein in etwa radiales Anpressen der hervorstehenden Dichtlippe an die Rohrwand und andererseits eine Verformung des ersten Radialwulstes im wesentlichen in axialer Richtung. Diese Verformung drückt über den zusammengepreßten Spalt schräg auf den zweiten Radialwulst, wodurch dieser mit einer erhöhten Anpreßkraft auf die Rohrwand drückt und eine zusätzliche, zu dem erhöhten Druck proportionale Abdichtung mit progressiver Dichtwirkung bildet.

Das Dichtelement kann einen vertieft ausgebildeten Übergangsbereich aufweisen, der sich an die Hinterschneidung des ersten Radialwulstes in Richtung auf den beispielsweise zylindrisch geformten Bereich des Dichtelementes anschließt. Dann kann sich der erste Radialwulst leichter mit einer radialen Komponente verformen, da seine Verformungselastizität durch Schwächung seiner Basis im Übergangsbereich verbessert wird.

Wird gemäß einem weiteren Ausführungsbeispiel die Dichtlippe des zweiten Radialwulstes gegenüber der Dichtfläche des ersten Radialwulstes in radialer Richtung nach außen zurückversetzt angeordnet, so legt sich beim Verspannen zuerst die Dichtfläche des ersten Radialwulstes an die Rohrwand an. Danach legt sich die Dichtlippe des zweiten Radialwulstes an die Rohrwand an, wodurch sie sich nicht unter die Dichtfläche des ersten Radialwulstes schieben kann. Diese Anordnung hat eine definierte Lage der Dichtlippe an der Rohrwand zur Folge, die bei Druckerhöhung zu einer gleichmäßigeren Abdichtung mit verbesserter Dichtwirkung auch bei rauhen oder unebenen Oberflächen führt.

Wird die Dichtfläche des äußeren, zweiten Radialwulstes in eine axial geneigte und eine achsparallele Dichtfläche aufgeteilt, so steigt bei verspannter Dichtvorrichtung die Anpreßkraft in der geneigten Dichtfläche in etwa linear an, während die achsparallele Dichtfläche nur geringfügig mit vernachlässigbarer Anpreßkraft oder kraftlos aufliegt. Somit muß nur die minimal nötige Anpreßkraft aufgebracht werden, die das Rohr mit minimaler Flächenpressung ohne Verformung des Rohres belastet.

Vorzugsweise ist das Dichtelement in axialer Richtung spiegelsymmetrisch ausgebildet. Dann ist das Dichtelement durch das an einer Rohrverbindungsstelle beidseitige Aufliegen der Radialwülste in besonders zweckmäßiger Weise nutzbar, da die gleichen Dichtbedingungen an den beiden Radialwülsten auftreten. So ergibt sich eine schlag- und schocksichere Dichtung, die auch vibrations- und rüttelfest ist und insbesonders bei Gasleitungen eine erhöhte Brand- und Explosionssicherheit bietet, wie sie z. B. in erdbebengefährdeten Gebieten unerläßlich ist.

Vorzugsweise wird das Dichtelement lose oder mit einem Paßsitz mit relativ geringer Einsetzkraft in das Gehäuse eingelegt. Dann kann sich das Dichtelement beim Schließen des Gehäuses oder bei Bewegungen der Rohrenden an seinem Umfang relativ zu dem Gehäuse geringfügig bewegen, so daß keine Spannungen im Dichtelement aufgebaut werden, die die Dichtwirkung einschränken könnten. Durch Aufbringen eines Gleit- oder Schmiermittels am Außenumfang des Dichtelementes und/oder am Innenumfang des Gehäuses kann eine unerwünschte Reibung, die die Ausgleichsbewegung behindern würde, weiter reduziert werden.

Die Erfindung wird nachfolgend anhand eines Ausführungsbeispiels unter Bezugnahme auf Zeichnungen näher erläutert. Es zeigt:
- Fig. 1: in schematischer geschnittener Darstellung eine erfindungsgemäße Dichtvorrichtung, die eine Rohrverbindung umgibt;
- Fig. 2: die Dichtvorrichtung der Fig. 1 in verspanntem Zustand mit sich ergebendem radialen Druckkraftverlauf an der Dichtfläche der Dichtung;
- Fig. 3: in schematischer geschnittener Darstellung die Dichtvorrichtung bei steigendem Leitungsdruck mit daraus resultierendem radialen Druckkraftverlauf an der Dichtfläche der Dichtung; und
- Fig. 4: in perspektivischer Ansicht das teilweise aufgeschnittene Gehäuse mit der Dichtung in verspanntem Zustand.

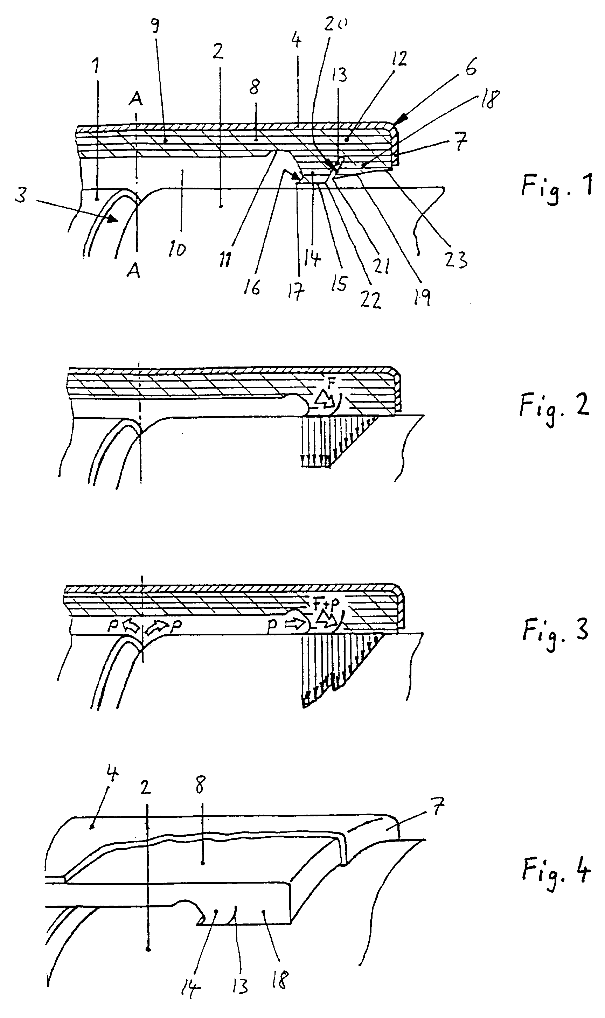

In Fig. 1 ist eine Rohrverbindungsstelle von zwei Rohren 1 und 2 einer Rohrleitung dargestellt. Die Rohre 1, 2 grenzen mit ihrem jeweiligen einander zugewandten offenen Ende aneinander. Sie können mit einem Spalt 3 oder auf Stoß ohne Spalt oder nur mit geringem Spalt montiert sein. Ebenso kann die Rohrverbindung beispielsweise durch Verschraubung oder durch Ineinanderstecken (nicht dargestellt) gebildet werden. Eine derartige einfache Verbindung ist nicht gas- oder fluiddicht, so daß Leckagen durch Austritt des in dem Rohr enthaltenen Mediums auftreten können.

In den Figuren ist die Rohrverbindung mit einem Spalt 3 dargestellt, um die Möglichkeit des Austritts des Mediums zu verdeutlichen. Die Dichtvorrichtung, die symmetrisch zu einer in Fig. 1 dargestellten Achse bzw. Querschnittsfläche A-A ausgebildet ist, ist in den Figuren lediglich mit ihrem Mittelbereich und ihrer rechten Halbseite dargestellt. Die Beschreibung des Ausführungsbeispiels erfolgt anhand der Geometrie an einer Schnittansicht, soll jedoch auf eine rotationsförmige Dichtvorrichtung bezogen sein.

Ein Gehäuse 4 ist in der Art einer Muffe oder einer Rohrschelle im wesentlichen rotationssymmetrisch ausgebildet und mit einem mechanischen Verschluß versehen, um an einem Rohr durch Umgreifen desselben festgelegt zu werden. Das Gehäuse 4 wird in anfangs unverspanntem Zustand in etwa mittig über der Rohrverbindungsstelle, d. h. über dem Spalt 3, angeordnet. Dann liegen die beiden axialen Enden 6 des Gehäuses 4 über den Endbereichen der Rohre 1 und 2. Das Gehäuse 4 hat an seinem jeweiligen Ende 6 eine sich radial nach innen erstreckende Abschlußwand 7.

Im Inneren des Gehäuses 4 ist ein rotationssymmetrisches, ringförmiges Dichtelement 8 aus elastomerem Werkstoff, das in Form einer Manschette ausgebildet ist, eingesetzt. Das Dichtelement 8 liegt mit seiner Außenseite am Innenumfang des Gehäuses 4 an. Vor dem Einsetzen des Dichtelementes 8 kann an seiner Außenseite oder an der Innenseite des Gehäuses 4 eine Gleitpaste oder ein ähnlicher Schmierstoff aufgetragen werden.

In der vorliegenden Beschreibung der Dichtvorrichtung bedeutet Innendurchmesser oder Innenradius das Innenmaß des Dichtelementes 8 an einem jeweiligen Querschnitt. Das Dichtelement 8 weist in einem mittleren ersten Bereich 9, der die Verbindungsstelle der Rohre 1 und 2 übergreift, einen Innendurchmesser auf, der größer ist als der Außendurchmesser der Rohre 1 und 2, so daß ein dichtungsinnenseitiger, im wesentlichen ringförmiger Hohlraum 10 zwischen dem mittleren Bereich 9 des Dichtelementes 8 und den Außenwänden bzw. Oberflächen der Rohre 1 und 2 auch in einem verspannten Zustand des Gehäuses 4 verbleibt (siehe Fig. 2).

In axialer Richtung schließt sich ein Übergangsbereich 11 an, der einen größeren Innendurchmesser als der mittlere Bereich 9 des Dichtelementes 8 aufweist. Dieser Übergangsbereich 11 kann als Ringnut mit kreisbogenförmigem oder ähnlich geformtem Querschnitt oder mit abgeschrägten Seitenwänden ausgebildet sein. Der Übergangsbereich 11 geht in einen abdichtenden Ringwulst 12 mit kleinerem Innendurchmesser über, der durch eine Ausnehmung in Form einer schmalen, schlitzförmigen Nut oder eines ringförmigen Spaltes 13 in zwei Wulstbereiche, und zwar in die Radialwülste 14 und 18, unterteilt ist.

Der Radialwulst 14 schließt sich in axialer Richtung an den Übergangsbereich 11 an. Er weist eine Dichtfläche 15 auf, die sich in etwa parallel zur Oberfläche der Rohrleitung axial bis zum Spalt 13 erstreckt. Am Radialwulst 14 ist zum Übergangsbereich 11 hin eine axiale Nut in Form einer Hinterschneidung 16 ausgebildet, die in Richtung auf das Rohr 2 in die Dichtfläche 15 des Radialwulstes 14 übergeht, wobei eine hervorspringende, spitzwinklige, in etwa axial einwärts zur Rohrverbindung weisende Dichtlippe 17 gebildet wird.

Der Spalt 13 erstreckt sich - bei axialer Betrachtung (d. h. bei Blickrichtung nach rechts in Fig. 1) - unter einem stumpfen Winkel, der beispielsweise etwa 110° bis 130° betragen kann, von der Dichtfläche 15 des Radialwulstes 14 ins Innere des Dichtelementes 8 bzw. der Ringwulst 12, wobei der Spalt 13 eine größte Tiefe bzw. einen größten Durchmesser aufweist, der in etwa dem Innendurchmesser des mittleren Bereiches 9 des Dichtelementes 8 entspricht.

Der sich axial anschließende Dichtungsbereich, der sich von dem Spalt 13 bis zur Abschlußwand 7 des Gehäuses 4 erstreckt, bildet den zweiten Radialwulst 18. Der zweite Radialwulst 18 weist eine erste Dichtfläche 19 auf, die mit der durch den Spalt 13 festgelegten Seitenwand 20 des Radialwulstes 18 eine unter spitzem Winkel zulaufende Dichtlippe 21 bildet. Der durch die Vorderkante der Dichtlippe 21 definierte Innendurchmesser ist kleiner als der Durchmesser der benachbarten Außenkante 22 des Radialwulstes 14, die als Grenzlinie zwischen der Dichtfläche 15 des Radialwulstes 14 und dem Spalt 13 gebildet wird. Die erste Dichtfläche 19 erstreckt sich in axialer Richtung mit sich erweiterndem Durchmesser und geht in eine zweite Dichtfläche 23 über, die sich mit konstantem Durchmesser bis zum Abschluß 7 des Gehäuses 4 erstreckt.

Das Dichtelement 8 ist spiegelsymmetrisch ausgebildet und weist an seinem nicht dargestellten linken Endbereich einen dem Ringwulst 12 entsprechenden Ringwulst in spiegelsymmetrischer Anordnung auf.

Zum Verspannen der Dichtvorrichtung wird das Gehäuse 4 beispielsweise mit einem Schraubverschluß (nicht dargestellt) verspannt, so daß das Gehäuse 4 in radialer Richtung gegen das Rohr 2 und gegen das Rohr 1 gedrückt wird, wobei sich der Radialwulst 14 mit seiner Dichtfläche 15 am Rohr 2 anlegt. Durch weiteres Verspannen wird der Radialwulst 14 unter elastischer Verformung seines gummiartigen Werkstoffs radial komprimiert, wobei seine dem Spalt 13 zugewandte Seitenfläche den Spalt 13 ausfüllt, an der Seitenwand 20 des zweiten Radialwulstes 18 zum Anliegen kommt und gegen diese drückt. Das Gehäuse 4 wird soweit radial verspannt, bis die zweite Dichtfläche 23 des Radialwulstes 18 am Rohr 2 ohne oder mit geringem Druck anliegt. Dann drückt auch der dem Spalt 13 zugewandte Seitenbereich des Radialwulstes 14 auf den zweiten Radialwulst 18 und auf die Dichtlippe 21 und es ergibt sich eine in Fig. 2 dargestellte verspannte Stellung des Dichtelements 8 mit dem aufgrund der speziellen Geometrie der Radialwülste 14, 18 sich ergebenden Druckverlauf an den Dichtflächen 15, 19, 23. Beim Verspannen wird somit eine zweifache Abdichtwirkung erzielt, indem einerseits die Dichtfläche 15 des Radialwulstes 14 und die Dichtfläche 19 des Radialwulstes 18 gegen das Rohr 2 drücken, und indem andererseits der Radialwulst 14 - den Spalt 13 ausfüllend - zusätzlich gegen den Radialwulst 18 und insbesondere dessen Dichtlippe 21 drückt und somit eine zweite Abdichtwirkung erzielt. Dies ergibt eine zuverlässige Feinabdichtung auch bei niedrigem Leitungsdruck und bei Vakuum, wenn im Ringwulst 12 lediglich eine geringe Anpreßkraft aufgebracht wird.

Steigt der Druck p des Mediums in der Rohrleitung (siehe Fig. 3) an, so nimmt auch der Druck im Hohlraum 10 proportional zu. Dieser Druck p übt eine Kraft auf die dem Hohlraum 10 zugewandte Seite des Radialwulstes 14 (Übergangsbereich 11 und Hinterschneidung 16) aus, so daß die Dichtlippe 17 und die Dichtfläche 15 durch die beschriebene elastische Verformung des Radialwulstes 14 zusätzlich gegen die Oberfläche des Rohres 2 gepreßt werden. Durch die Hinterschneidung 16 kann sich der Radialwulst 14 bei Druckerhöhung im Medium und somit im Hohlraum 10 auch radial gegen das Rohr 2 verformen. Der Druck p führt des weiteren zu einer zusätzlichen Verformung oder Auswölbung des Radialwulstes 14 in axialer Richtung, so daß er auf den Radialwulst 18 und insbesondere auf dessen Dichtlippe 21 drückt und somit zu einer Erhöhung der Anpreßkraft des Dichtelementes 8 mit seinem Ringwulst 12 auf das Rohr 2 führt. Der sich ergebende Druckverlauf an den Dichtflächen 15, 19, 23 ist schematisch in Fig. 3 dargestellt, wobei mit F in Pfeilrichtung die durch die Verspannung erzeugte Kraft im abdichtenden Ringwulst 12 und durch P die durch den ansteigenden Druck erzeugte Kraft bezeichnet wird. Somit kann bei einem niedrigen Ausgangsdruck in der Rohrleitung eine geringe Anpreßkraft ausreichen, die nicht für einen maximalen Druck ausgelegt sein muß und daher die Rohrwand nur gering belastet, und bei steigendem Druck erhöht sich damit einhergehend die Anpreß- bzw. Dichtkraft.

Das Gehäuse 4 der Dichtvorrichtung sowie die Verschlußteile und Spannschrauben bestehen vorzugsweise aus Metall, insbesondere aus rostfreiem Edelstahl.

Die Dichtmanschette bzw. das Dichtelement 8 besteht aus synthetischem Kautschuk, der abhängig vom jeweiligen Medium ausgewählt wird. So ist ein EPDM-Gummi (Ethylen-Propylen-Dien-Elastomer) für alle Wasserqualitäten, für Abwässer, Luft, Feststoffe und Chemieprodukte geeignet, während ein NBR-Kautschuk (Acrylnitril-Butadien-Elastomer) bei Gas, Öl, Brenn-/Treibstoffen und anderen Kohlenwasserstoffen verwendet wird.

Die Dichtvorrichtung kann, wie beschrieben, zur Abdichtung einer Verbindungsstelle von zwei zu verbindenden Rohren einer Rohrleitung verwendet werden. Dabei können die beiden Rohre durch Haltemittel in ihrer gegenseitigen Stellung festgelegt sein, so daß die Dichtvorrichtung im wesentlichen auf die Funktion der Abdichtung beschränkt ist.

Die Dichtvorrichtung kann jedoch auch die Haltefunktion der Enden der Rohre 1 und 2 übernehmen, beispielsweise bei frei verlegten Abwasserrohren, wobei sie dann die Enden der Rohre zueinander zentriert hält.

Durch die erfindungsgemäße Dichtvorrichtung kann sowohl eine undichte Stelle eines Rohres wie auch ein schmaler oder ein breiter Spalt zwischen den Rohrenden einer Rohrverbindung überbrückt und abgedichtet werden, so daß die Dichtvorrichtung als Längenkompensator verwendbar ist. Des weiteren eignet sich die Dichtvorrichtung bei Achsversatz der Rohrenden in radialer Richtung, bei Winkelversatz und bei einer gegenläufigen Rotationsbewegung der Rohrenden sowie bei unterschiedlichen Rohrdurchmessern.

Die Dichtvorrichtung ist bei vielen Rohrmaterialien verwendbar. So können die Rohre aus Stahl (auch längsgeschweißt oder spiralverschweißt), aus Nichteisenmetall (Aluminium, Kupfer und deren Legierungen), aus Kunststoff (PE, PP, PVC, ABS, glasfaserverstärkte Kunststoffe GFK) oder aus anderen Materialien (Glas, Faserzement, Keramik) bestehen.

Das Gehäuse 4 und das Dichtelement 8 können in einer Längsebene halbseitig oder durchgehend geteilt ausgebildet sein, so daß die Dichtvorrichtung vollständig teilbar oder um ein an dem Gehäuse angeordnetes Scharnier aufklappbar ist. Dann ist die Dichtvorrichtung besonders einfach montierbar, da die abzudichtenden Rohre nicht voneinander getrennt werden müssen. Insbesondere ist die Dichtvorrichtung als Reparaturteil an einem undichten Rohr verwendbar.

Wenn die Teil- oder Trennebene, die durch die Längsachse der Dichtvorrichtung führt, zwischen den beiden Radialwülsten 14, 18 um einen Winkel bezüglich der Längsachse versetzt ist, wird eine geradlinige durchgehende Trennfuge im Bereich des Ringwulstes 12 vermieden. Somit bleibt die verbesserte Dichtwirkung erhalten.

Das Dichtelement, das mit Bezug auf eine rotationssymmetrische Dichtvorrichtung beschrieben worden ist, kann auch in horizontaler, flächiger Konfiguration ausgebildet werden, wobei die Geometrien der Radialwülste auf eine ebene Dichtvorrichtung übertragen werden.

## Patentansprüche

1. Dichtvorrichtung zum Abdichten von Rohrleitungen für gasförmige oder fluide Medien, die ein die Rohrleitung umgreifendes, schließbares Gehäuse (4) und ein Dichtelement (8) enthält, das aus elastomerem Werkstoff besteht, im Gehäuse (4) ringförmig angeordnet ist und an seinen beiden axialen Randbereichen zwei axial beabstandete, radial einwärts hervorstehende Ringwulste (12) aufweist, die sich beim Spannen des Gehäuses (4) an die abzudichtende Rohrleitung (2) anlegen, wobei jeder Ringwulst (12) durch einen ringförmigen Spalt (13) in einen ersten, inneren und einen zweiten, äußeren Radialwulst (14 bzw. 18) unterteilt ist und der innere Radialwulst (14) eine Dichtfläche (15) aufweist, die sich in etwa parallel zur Dichtungslängsachse mit in axialer Richtung erweiterter Länge zum Bilden eines verbreiterten Dichtbereichs erstreckt,
wobei sich der ringförmige Spalt (13) von der Dichtfläche (15) des inneren Radialwulstes (14) unter Bildung einer spitzwinkligen Dichtlippe (21) am zweiten, äußeren Radialwulst (18) geneigt in den Ringwulst (12) erstreckt und beim Spannen des Gehäuses (4) durch elastische Verformung der beiden angrenzenden Radialwulste (14, 18) schließt, so daß der innere Radialwulst (14) zusätzlichen Druck auf die spitzwinklige Dichtlippe (21) am zweiten, äußeren Radialwulst (18) ausübt, und
das Dichtelement (8) einen ringförmigen, vertieften Mittelbereich (9) aufweist, der bei gespanntem Gehäuse (4) einen ringförmigen Hohlraum (10) begrenzt, der sich zwischen den beiden inneren Radialwulsten (14) erstreckt.

2. Dichtvorrichtung nach Anspruch 1, dadurch gekennzeichnet, daß die Dichtlippe (21) unter spitzem Winkel in eine Vorderkante zuläuft.

3. Dichtvorrichtung nach Anspruch 1 oder 2, dadurch gekennzeichnet, daß der erste Radialwulst (14) dichtungsinnenseitig eine axiale Ringnut in Form einer Hinterschneidung (16) aufweist, die am Radialwulst (14) eine dichtungseinwärts gerichtete spitzwinklige Dichtlippe (17) bildet.

4. Dichtvorrichtung nach Anspruch 3, dadurch gekennzeichnet, daß das Dichtelement (8) einen vertieften Übergangsbereich (11) aufweist, der an die Hinterschneidung (16) des ersten Radialwulstes (14) angrenzt.

5. Dichtvorrichtung nach einem der Ansprüche 1 bis 4, dadurch gekennzeichnet, daß die Vorderkante der Dichtlippe (21) gegenüber der Dichtfläche (15) des ersten Radialwulstes (14) radial nach außen versetzt ist.

6. Dichtvorrichtung nach einem der Ansprüche 1 bis 5, dadurch gekennzeichnet, daß der zweite Radialwulst (18) eine erste, in axialer Richtung geneigte, sich radial erweiternde Dichtfläche (19) und eine zweite Dichtfläche (23) aufweist, die sich an die erste Dichtfläche (19) anschließt und sich in axialer Richtung im wesentlichen mit konstantem Durchmesser bis zu einer äußeren Abschlußwand (7) des Gehäuses (4) erstreckt.

7. Dichtvorrichtung nach einem der Ansprüche 1 bis 6, dadurch gekennzeichnet, daß das Dichtelement (8) in einer axialen Längsebene halbseitig oder durchgehend geteilt ausgeführt ist, so daß es mit dem Gehäuse (4) um eine Rohrleitung legbar ist.

8. Dichtvorrichtung nach Anspruch 7, dadurch gekennzeichnet, daß eine Trennebene zwischen den beiden Radialwulsten (14, 18) einen Winkelversatz in Umfangsrichtung aufweist.

9. Dichtvorrichtung nach einem der Ansprüche 1 bis 8, dadurch gekennzeichnet, daß das Gehäuse (4) eine an seinem Außenumfang angeordnete Spanneinrichtung aufweist.

10. Dichtvorrichtung nach einem der Ansprüche 1 bis 9, dadurch gekennzeichnet, daß das Dichtelement (8) im Gehäuse (4) lose oder mit Paßsitz eingelegt ist.

11. Dichtvorrichtung nach einem der Ansprüche 1 bis 10, dadurch gekennzeichnet, daß ein reibungsverminderndes Mittel am Außenumfang des Dichtelementes (8) und/oder am Innenumfang des Gehäuses (4) aufgetragen ist.

12. Dichtvorrichtung nach einem der Ansprüche 1 bis 11, dadurch gekennzeichnet, daß der elastomere Werkstoff des Dichtelementes (8) ein EPDM-Gummi (Ethylen-Propylen-Dien-Elastomer) oder ein NBR-Kautschuk (Acrylnitril-Butadien-Elastomer) ist.

## Claims

1. A sealing device for sealing conduits for gaseous or fluid media, including a closeable housing (4) embracing the conduit, and a sealing member (8) which consists of elastomeric material and is arranged in an annular configuration in the housing (4) and has on its two axial edge regions two axially spaced annular beads (12) projecting radially inwards to bear against the conduit (2) to be sealed when the housing (4) is clamped, wherein each annular bead (12) is divided by an annular gap (13) into a first, inner and a second, outer radial bead (14 and 18, resp.), and the inner radial bead (14) has a sealing surface (15) extending approximately parallel to the longitudinal seal axis with its length widening in the axial direction to form a broadened sealing region,
wherein the annular gap (13) extends inclinedly from the sealing surface (15) of the inner radial bead (14) into the annular bead (12) whilst forming an acute-angled sealing lip (21) on the second, outer radial bead (18), and closes by an elastic deformation of the two adjoining radial beads (14, 18) when the housing (4) is clamped, so that the inner radial bead (14) exerts an additional pressure on the acute-angled sealing lip (21) on the second, outer radial bead (18), and
the sealing member (8) has an annular, recessed middle region (9) which in the clamped condition of the housing (4) defines an annular hollow space (10) extending between the two inner radial beads (14).

2. A sealing device according to claim 1, characterized in that the sealing lip (21) extends at an acute angle to form a front edge.

3. A sealing device according to claim 1 or 2, characterized in that on the inner side of the seal the first radial bead (14) has an axial annular groove in the form of an undercut (16) which forms on the radial bead (14) an acute-angled sealing lip (17) directed inwardly of the seal.

4. A sealing device according to claim 3, characterized in that the sealing member (8) has a recessed transition region (11) bordering on the undercut (16) of the first radial bead (14).

5. A sealing device according to any one of claims 1 to 4, characterized in that the front edge of the sealing lip (21) is displaced radially outwards with respect to the sealing surface (15) of the first radial bead (14).

6. A sealing device according to any one of claims 1 to 5, characterized in that the second radial bead (18) has a first sealing surface (19) which is inclined in the axial direction and widens radially, and a second sealing surface (23) which adjoins the first sealing surface (19) and extends in the axial direction substantially with constant diameter as far as an outer terminal wall (7) of the housing (4).

7. A sealing device according to any one of claims 1 to 6, characterized in that the sealing member (8) is designed to be split on one side or completely along an axial longitudinal plane, so that together with the housing (4) it may be placed around a conduit.

8. A sealing device according to claim 7, characterized in that a plane of separation between the two radial beads (14, 18) is angularly displaced in the circumferential direction.

9. A sealing device according to any one of claims 1 to 9, characterized in that the housing (4) has a clamping means disposed on its outer periphery.

10. A sealing device according to any one of claims 1 to 9, characterized in that the sealing member (8) is inserted in the housing (4) loosely or with a snug fit.

11. A sealing device according to any one of claims 1 to 10, characterized in that a friction-reducing agent is applied to the outer periphery of the sealing member (8) and/or the inner periphery of the housing (4).

12. A sealing device according to any one of claims 1 to 11, characterized in that the elastomeric material of the sealing member (8) is an EPDM rubber (ethylene-propylene-diene elastomer) or an NBR rubber (acrylonitrile-butadiene elastomer).

## Revendications

1. Dispositif d'étanchéité pour l'étanchement d'une tuyauterie pour milieux gazeux ou fluides, qui comporte un boîtier (4) entourant la tuyauterie et pouvant être fermé ainsi qu'un élément d'étanchéité (8) qui consiste en un matériau élastomère qui est disposé en forme d'anneau dans le boîtier (4) et qui présente en ses deux zones de bord axiales deux bourrelets annulaires (12) espacés axialement et en radialement saillie vers l'intérieur, qui lors du serrage du boîtier (4) s'appuient contre la tuyauterie (2) à rendre étanche, chaque bourrelet annulaire (12) étant subdivisé par une fente annulaire (13) en un premier bourrelet radial intérieur et en un second bourrelet radial extérieur (14 et 18) et le bourrelet radial intérieur (14) présentant une surface d'étanchéité (15) qui s'étend à peu près parallèlement à l'axe longitudinal de l'étanchéité avec une longueur augmentée en direction axiale pour former une zone d'étanchéité élargie,
la fente annulaire (13) s'étendant à partir de la surface d'étanchéité (15) du bourrelet radial intérieur (14) en formant une lèvre d'étanchéité à angle aigu (21) au second bourrelet axial extérieur (18) inclinée dans le bourrelet annulaire (12) et ferme lors du serrage du boîtier (4) par la déformation élastique des deux bourrelets radiaux (14, 18) adjacents, de manière à ce que le bourrelet radial intérieur (14) exerce une pression supplémentaire sur la lèvre d'étanchéité à angle aigu (21) du second bourrelet radial extérieur (18) et
l'élément d'étanchéité (8) présentant une zone médiane (9) annulaire en retrait qui lorsque le boîtier (4) est serré délimite une cavité annulaire (10) qui s'étend entre les deux bourrelets radiaux intérieurs (14).

2. Dispositif d'étanchéité selon la revendication 1, caractérisé en ce que la lèvre d'étanchéité (21) s'étend à angle aigu vers une arête avant.

3. Dispositif d'étanchéité selon les revendications 1 ou 2, caractérisé en ce que le premier bourrelet radial (14) présente du côté intérieur de l'étanchéité une rainure annulaire axiale sous forme d'une contre-dépouille (16), qui au bourrelet radial (14), forme une lèvre d'étanchéité (17) à angle aigu dirigée vers l'intérieur de l'étanchéité.

4. Dispositif d'étanchéité selon la revendication 3, caractérisé en ce que l'élément d'étanchéité (8) présente une zone de transition (11) en retrait qui est adjacent à la contre-dépouille (16) du premier bourrelet radial (14).

5. Dispositif d'étanchéité selon l'une quelconque des revendications 1 à 4, caractérisé en ce que l'arête avant de la lèvre d'étanchéité (21) est décalée radialement vers l'extérieur par rapport à la surface d'étanchéité (15) du premier bourrelet radial (14).

6. Dispositif d'étanchéité selon l'une quelconque des revendications 1 à 5, caractérisé en ce que le second bourrelet radial (18) présente une première surface d'étanchéité inclinée en direction axiale et s'élargissant radialement et une seconde surface d'étanchéité (23) qui est adjacente à la première surface d'étanchéité (19) et qui s'étend en direction axiale substantiellement à diamètre constant jusqu'à une paroi de fermeture extérieure du boîtier (4).

7. Dispositif d'étanchéité selon l'une quelconque des revendications 1 à 6, caractérisé en ce que l'élément d'étanchéité (8) est exécuté subdivisé à moitié ou intégralement dans un plan axial longitudinal de manière à ce qu'il puisse être posé avec le boîtier (4) autour d'une tuyauterie.

8. Dispositif d'étanchéité selon la revendication 7, caractérisé en ce qu'un plan de séparation entre les deux bourrelets radiaux (14, 18) présente un déport angulaire en direction de la circonférence.

9. Dispositif d'étanchéité selon l'une quelconque des revendications 1 à 8, caractérisé en ce que le boîtier (4) présente sur sa circonférence extérieure un dispositif de serrage.

10. Dispositif d'étanchéité selon l'une quelconque des revendications 1 à 9, caractérisé en ce que l'élément d'étanchéité (8) est placé dans le boîtier (4) librement ou dans un logement ajusté.

11. Dispositif d'étanchéité selon l'une quelconque des revendications 1 à 10, caractérisé en ce qu'un moyen réducteur de la friction est appliqué sur la circonférence extérieure de l'élément d'étanchéité (8) et/ou sur la circonférence intérieure du boîtier (4).

12. Dispositif d'étanchéité selon l'une quelconque des revendications 1 à 11, caractérisé en ce que le matériau élastomère de l'élément d'étanchéité (8) est un caoutchouc EPDM (élastomère éthylène-propylène-diène) ou un caoutchouc NBR (élastomère acrylnitrile-butadiène).
